(19) Europäisches Patentamt / European Patent Office / Office européen des brevets

(11) **EP 2 620 721 B1**

(12) **EUROPEAN PATENT SPECIFICATION**

(45) Date of publication and mention
of the grant of the patent:
**18.09.2019 Bulletin 2019/38**

(51) Int Cl.:
*F25B 1/02* *(2006.01)*     *F25B 5/02* *(2006.01)*
*F25B 49/02* *(2006.01)*    *F04B 49/02* *(2006.01)*
*F04B 49/06* *(2006.01)*    *F25B 1/10* *(2006.01)*

(21) Application number: **13153057.8**

(22) Date of filing: **29.01.2013**

(54) **Apparatus and method for controlling compressor, and refrigerator having the same**

Vorrichtung und Verfahren zum Steuern eines Kompressors und Kühlschrank damit

Appareil et procédé de commande de compresseur et réfrigérateur le comportant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.01.2012 KR 20120009082**

(43) Date of publication of application:
**31.07.2013 Bulletin 2013/31**

(73) Proprietor: **LG Electronics Inc.
Seoul 07336 (KR)**

(72) Inventors:
 • **Yoo, Jaeyoo**
  **Seoul (KR)**
 • **Nah, Taewoong**
  **Seoul (KR)**

(74) Representative: **Ter Meer Steinmeister & Partner
Patentanwälte mbB
Nymphenburger Straße 4
80335 München (DE)**

(56) References cited:
**EP-A1- 2 381 190         WO-A2-2008/019689
US-A1- 2007 144 190    US-A1- 2008 150 456**

EP 2 620 721 B1

**Description**

BACKGROUND OF THE INVENTION

1. Field of the invention

The present disclosure relates to a compressor control apparatus and a refrigerator comprising the same for precisely controlling two compressors provided in the refrigerator.

2. Description of the related art

In general, refrigerator is an apparatus for storing goods such as foods, beverages and the like to keep them fresh for a long period of time, and they are stored in a freezing or refrigerating state based on the kind of the good to be stored.

Such a refrigerator is operated by driving a compressor provided therein. Cool air supplied to an inner portion of the refrigerator is generated by the operation of heat exchange with refrigerant, and continuously supplied to an inner portion of the refrigerator while repeatedly performing compression-condensation-expansion-evaporation cycles, and the supplied refrigerant is uniformly transferred to an inner portion of the refrigerator by convection, thereby allowing foods within the refrigerator to be stored at a desired temperature. The cycles may vary based on the configuration of a freezing cycle apparatus within the refrigerator.

In general, a freezing device, such as a refrigerator, an air conditioner or the like, may include a compressor for converting mechanical energy into compression energy of a compression fluid.

Compressors may be divided into a reciprocating compressor, a rotary compressor, and a scroll compressor. The reciprocating compressor forms a compression space between a piston and a cylinder to inhale or discharge a working gas, thereby compressing refrigerant while moving in a linear reciprocating manner. The rotary compressor forms a compressor space between an eccentrically rotated roller and a cylinder to inhale or discharge a working gas, thereby compressing refrigerant while the roller is eccentrically rotated along an inner wall of the cylinder. The scroll compressor forms a compression space between an orbiting scroll and a fixed scroll to inhale or discharge a working gas, thereby compressing refrigerant while the orbiting scroll is rotated along the fixed scroll.

The reciprocating compressor allows an inner piston to move in a linear reciprocating manner within the cylinder, thereby inhaling, compressing and discharging a refrigerant gas. The reciprocating compressor is largely divided into a recipro type and a linear type depending on how the piston is driven.

The recipro type reciprocating compressor is a scheme in which a crank shaft is coupled to a rotating motor and a piston is coupled to the crank shaft, thereby converting a rotational movement into a linear reciprocating movement. On the contrary, the linear type reciprocating compressor is a scheme in which a piston is connected to a linearly moving mover of the motor, thereby converting a linear movement of the motor into a reciprocating movement of the piston.

The reciprocating compressor may include an electric power unit for generating a driving force, and a compression unit for receiving the driving force from the electric power unit to compress a fluid. A motor is typically used for the electric power unit, and a linear motor is used in case of the linear type.

For the linear motor, the motor itself directly generates a linear driving force, and thus a mechanical conversion device is not required, and the structure thereof is not complicated. Furthermore, the linear motor may reduce loss due to energy conversion, and there is no connecting portion causing friction and abrasion, thereby greatly reducing noise. Furthermore, when a linear type reciprocating compressor (hereinafter, referred to as a "linear compressor") is used for a refrigerator or air conditioner, a stroke voltage applied to the linear compressor may be changed to change the compression ratio, thereby providing an advantage that the linear compressor can be used for variable freezing capacity control.

When two compressors are applied to a two-stage refrigerator, the two compressors may have an effect on mutual suction pressure and discharge pressure, and also have an effect on the reliability of the compressor. In particular, in case of the linear compressor, its position may be controlled, thereby increasing difficulty in top dead center control.

EP 2 381 190 A1 relates to a refrigeration cycle device, wherein a refrigeration cycle apparatus is provided with a working fluid circuit and a first bypass passage. The working fluid circuit is formed of a first compressor, a heat radiator, an expander, an evaporator, a second compressor, and flow passages connecting these components in this order. The expander and the second compressor are coupled to each other by a power-recovery shaft so that the second compressor is driven by the power recovered by the expander. EP 2 381 190 A1 discloses a compressor control apparatus and a refrigerator according to the preamble of claim 1 and the preamble of claim 12, respectively.

US 2008 / 0150456 A1 relates to an apparatus and method for controlling an operation of a reciprocating compressor.

WO 2008 / 019689 A2 relates to a transcritical refrigeration system with a booster and a bypass valve, for example intended for a supermarket, the system comprising a flow circuit for recirculation of a refrigerant, the flow circuit comprising a high pressure compressor, a gas cooler, a high temperature pressure reducing device, a receiver, a medium temperature expansion valve, a medium temperature evaporator, and a gas bypass valve.

US 2007/0144190 A1 relates to a refrigerator in which a two-stage-compression mode power-variable refrigerant circuit having a freezer cooler and fresh-food cooler is controlled in accordance with information on temperature in the fresh-food compartment. The refrigerant circuit includes an inverter-driven power-variable compressor having a low-pressure compression element and a high-pressure compression element, a switching valve disposed downstream of a condenser receiving gas refrigerant discharged from the compressor and selecting and controlling channel and flow rate of the refrigerant, and a freezer cooler and a fresh-food cooler, each connected with the switching valve through a pressure reducer.

## SUMMARY OF THE INVENTION

In a refrigerator provided with two compressors according to the embodiments of the present disclosure, an object is to provide a compressor control apparatus and method for minimizing an effect of the suction pressure and discharge pressure between two mutual compressors, and a refrigerator comprising the same.

In a refrigerator provided with two compressors according to the embodiments of the present disclosure, another object is to provide a compressor control apparatus and method for adjusting a start-up time of two compressors to reduce an effect of the suction pressure and discharge pressure between mutual compressors so as to allow the compressors to be stably operated, and a refrigerator comprising the same.

The objects are solved by the features of the independent claims.

Preferably, the first compressor may be started after the second compressor when the first and the second compressors are operated together.

A compressor control apparatus for controlling a first and a second compressor connected to each other to compress refrigerant in two stages according to the invention includes a control unit configured to generate a first and a second control signal based on a load of the first and the second compressor to operate the first and the second compressor, wherein the control unit first starts the second compressor and detects a top dead center of the second compressor after starting the second compressor, and then starts the first compressor after the top dead center of the second compressor is detected.

Preferably, a first and a second stroke of the first and the second compressor, respectively, may be calculated, using a first and a second motor drive current and a first and a second motor drive voltage.

A compressor control method in an apparatus for controlling a first and a second compressor connected to each other to compress refrigerant in two stages according to an embodiment may include receiving a compressor operation mode, and starting the first and the second compressor according to the compressor operation mode, wherein said starting step first starts the second compressor, and starts the first compressor after a predetermined period of time has passed when the first and the second compressor are operated together.

A compressor control method in an apparatus for controlling a first and a second compressor connected to each other to compress refrigerant in two stages according to another embodiment may include receiving a compressor operation mode, and starting the first and the second compressor according to the compressor operation mode, wherein said starting step first starts the second compressor and detects a top dead center of the second compressor and then starts the first compressor when the first and the second compressor are operated together.

A refrigerator according to the invention is set out in claim 12.

In a refrigerator having two compressors according to the embodiments of the present disclosure, the start-up times of the two compressors may be controlled, thereby reducing an effect of the suction pressure and discharge pressure between mutual compressors.

According to the invention, the control unit first starts the second compressor and detects a top dead center of the second compressor after starting the second compressor, and then starts the first compressor after the top dead center of the second compressor is detected.

Preferably, the control unit may detect the top dead center based on an inflection point of the gas spring constant of the second compressor or an inflection point of the phase difference between the motor drive current and stroke.

According to the embodiments of the present disclosure, the effect of the suction pressure and discharge pressure between mutual compressors may be reduced to stably operate the compressors, thereby securing the reliability of the compressor and enhancing the consumption power as well as improving the stability of the compressor and refrigerator.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a perspective view illustrating a refrigerator having two compressors according to an embodiment;

FIG. 2 is a distribution diagram schematically illustrating a freezing cycle in FIG. 1;

FIGS. 3 and 4 are views schematically illustrating a compressor control apparatus using an inverter according to the embodiments of the present disclosure;

FIG. 5 is a view schematically illustrating a compressor control apparatus using an alternating current switch;

FIG. 6 is a graph illustrating a change of the gas spring constant and stroke according to the embodiments of the present disclosure;

FIGS. 7 and 8 are flow charts illustrating a compressor control apparatus according to the embodiments of the present disclosure;

FIG. 9 is a cross-sectional view illustrating a reciprocating compressor having a compressor control apparatus according to the embodiments of the present disclosure; and

FIG. 10 is a graph for explaining a problem in the related art.

DETAILED DESCRIPTION OF THE INVENTION

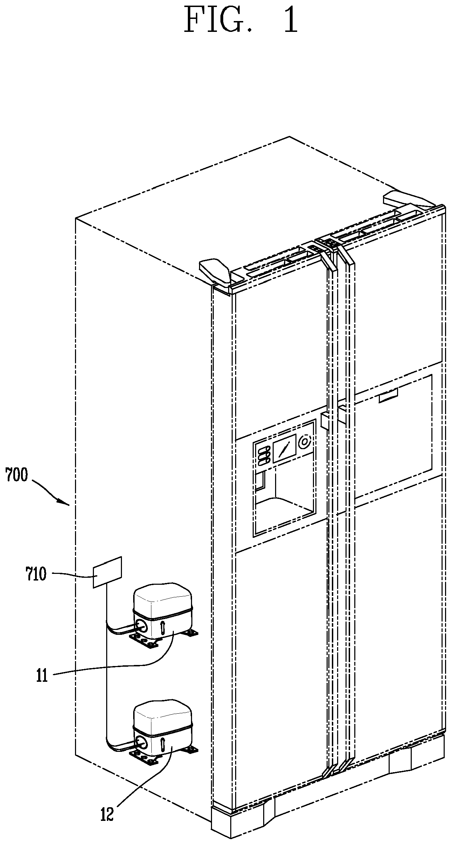

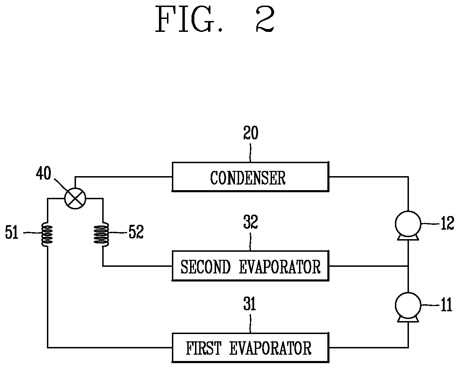

Referring to FIGS. 1 and 2, a refrigerator according to an embodiment, a first and a second compressor 11, 12 connected to each other to compress refrigerant in two stages, a condenser 20 connected to a discharge side of the second compressor located at a downstream side based on the flowing direction of the refrigerant, a first evaporator 31 branched from the condenser and connected to a suction side of the first compressor located at an upstream based on the flowing direction of the refrigerant, a second evaporator 32 branched from the condenser along with the first evaporator and connected between a discharge side of the first compressor and a suction side of the second compressor, a refrigerant switching valve 40 provided at a position branched from the outlet side of the condenser to the first evaporator and second evaporator to control the flowing direction of the refrigerant, and a control unit configured to start and operate the first and the second compressor.

Referring to FIG. 1, the refrigerator 700 is provided with a main board 710 therein for controlling the entire operation of the refrigerator, and connected to the first and the second compressor 11, 12. The compressor control apparatus may be provided in the main board 710. The refrigerator 700 is operated by driving the first and the second compressor. Cool air supplied to an inner portion of the refrigerator is generated by the operation of heat exchange with refrigerant, and continuously supplied to an inner portion of the refrigerator while repeatedly performing compression-condensation-expansion-evaporation cycles. The supplied refrigerant is uniformly transferred to an inner portion of the refrigerator by convection, thereby allowing foods within the refrigerator to be stored at a desired temperature.

A machine chamber is provided at a lower side of the refrigerator body, and the first and second compressors 11, 12 and condenser 20 of the freezing cycle apparatus for generating cool air are provided in the machine chamber. The two compressors 11, 12 are connected to each other in series. In other words, a discharge port of the first compressor 11 is connected to a suction port of the condenser 20 such that refrigerant compressed in one stage in the first compressor 11 is compressed in two stages in the second compressor 12. The discharge port of the second compressor 12 is connected to an inlet port of the condenser 20. The first compressor 11 and second compressor 12 may be designed to have the same capacity, but in case of a typical refrigerator, the operation of the freezing chamber is frequently carried out, and thus it may be designed such that the capacity of the second compressor 12 implementing a refrigerating chamber operation is twice greater than that of the first compressor 11.

The first and the second evaporator 31, 32 are branched into a first branch pipe and a second branch pipe from an outlet port of the condenser 20 and connected to each other in parallel. A refrigerant switching valve 40 controlling the flowing direction of refrigerant is provided at a branch point branched into the first branch pipe and second branch pipe, and a first expansion apparatus 51 and a second expansion apparatus 52 for expanding refrigerant are provided at the center of each branch pipe, namely, an inlet port end of both the evaporators 31, 32. The refrigerant switching valve 40 may be formed with a 3-way valve. For example, the refrigerant switching valve 40 may be formed with a structure in which an outlet port of the condenser and either one of the evaporators are selectively communicated or both evaporators are communicated at the same time.

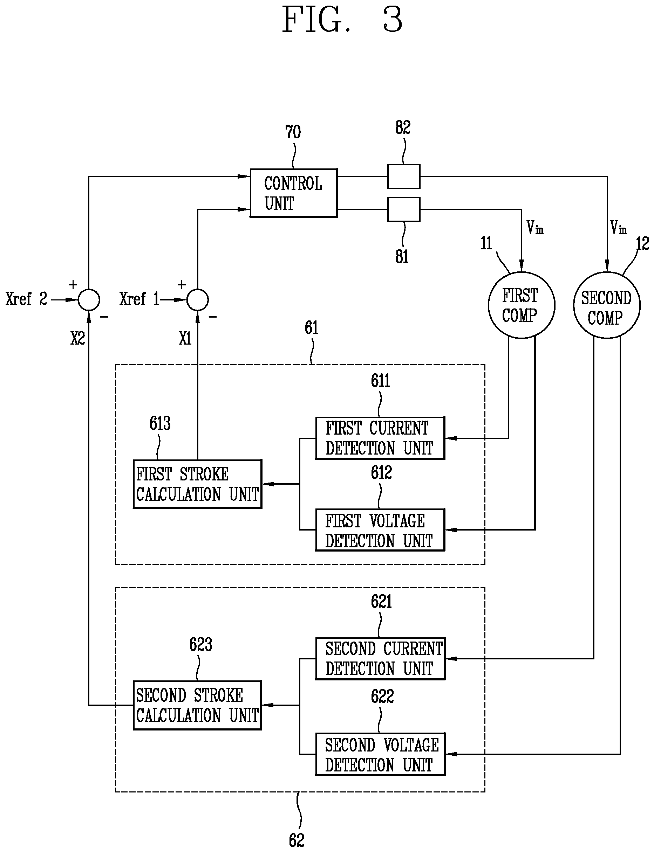

Referring to FIGS. 3 through 5, a compressor control apparatus for controlling a first and a second compressor connected to each other to compress refrigerant in two stages according to an embodiment may include a control unit 70 configured to generate a first and a second control signal based on a load of the first and the second compressor to operate the first and the second compressor. Here, the control unit 70 first starts the second compressor, and starts the first compressor after a predetermined period of time has passed when the first and the second compressor are operated together. Here, the predetermined period of time may be determined based on a time required to perform a normal operation after the compressor is started, and may be determined in advance such as 30 seconds, for example. The predetermined period of time may be also determined after the top dead center detection time.

Here, at least one of the first and the second compressor 11, 12 may be a reciprocating compressor, particularly, a linear compressor. Furthermore, the two compressors may be configured to have different capacities. The first and the second compressor may be operated in a simultaneous manner or operated in a separate manner, respectively, by a compressor control apparatus having two alternating current switches. It may be merely defined as a compressor operation mode. The compressor operation mode is an operation mode determined by a load or required freezing capacity of the first and the second compressor. The compressor operation mode is an operation mode for controlling the stroke, frequency or the like of each compressor by dividing it into a predetermined value. Here, the compressor operation mode may be merely divided into a separate operation mode of the first compressor, a separate operation mode of the second compressor, and a simultaneous operation mode of the first and the second compressor.

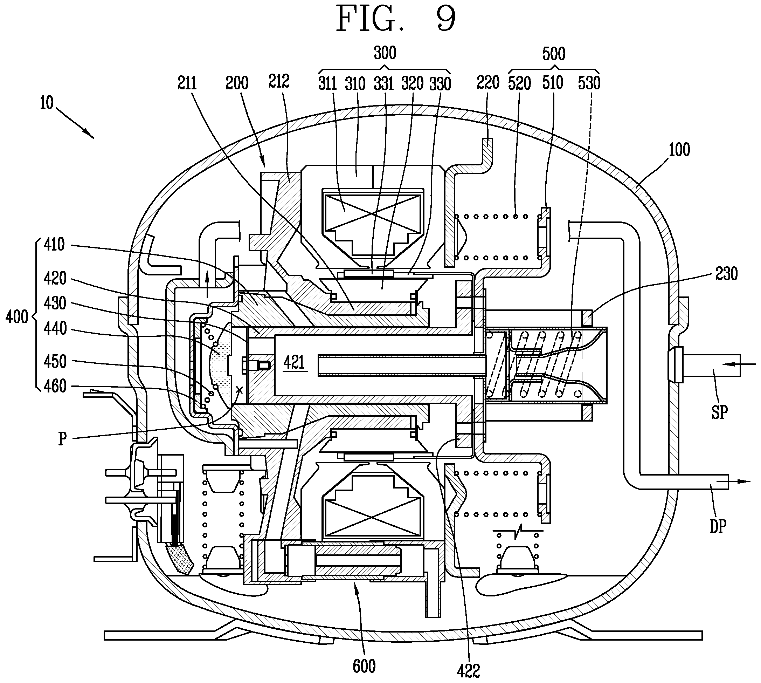

Referring to FIG. 9, the first and the second compressor may include a casing 100 communicated with a gas suction pipe (SP) and a gas discharge pipe (DP), a frame unit 200 elastically supported by an inner portion of the casing 100, a motor 300 supported by the frame unit 200 to allow a mover 330 to perform a linear reciprocating movement, a compression unit 400 in which a piston 420 is coupled to the mover 330 of the motor 300 and supported by the frame unit 200, a plurality of resonant units 500 for elastically supporting the mover 330 of the motor 300 and the piston 420 of the compression unit 400 in the movement direction to induce a resonant movement.

The frame unit 200 may include a first frame 210 by which the compression unit 400 is supported and which supports a front side of the motor 300, a second frame 220 coupled to the first frame 210 to support a rear side of the motor 300, and a third frame 230 coupled to the second frame 220 to support a plurality of resonant springs 530. The first frame 210, second frame 220, and third frame 230 may be all formed of a non-magnetic body, such as aluminium, to reduce core loss.

Furthermore, the first frame 210 is formed with a frame portion 211 having a ring plate shape, a cylinder portion 212 having a cylindrical shape into which a cylinder 410 is inserted is formed on a rear surface, namely, lengthwise as an integral body in the motor direction, at the center of the frame portion 211. The frame portion 211 is preferably formed such that the outer diameter of the frame portion 211 is at least not less than the inner diameter of the outer stator 310 of the motor 300 to support both an outer stator 310 and an inner stator 320.

Furthermore, the first frame 210 is fixed such that the inner stator 320 is inserted into an outer circumferential surface of the cylinder portion 212. In this case, the first frame 210 is preferably formed of a non-magnetic body, such as aluminium, to reduce magnetic loss. Furthermore, the cylinder portion 212 may be formed on the cylinder 410 as an integral body using an insert die casting method. However, the cylinder portion 212 may be screw-assembled such that the cylinder 410 is pressurized or a screw thread is formed at an inner circumferential surface thereof. Furthermore, it may be preferable in the stability aspect of the cylinder 410 that a step surface or inclined surface is formed between a front side inner circumferential surface and a rear side inner circumferential surface of the cylinder portion 212, thereby allowing the cylinder 410 coupled to an inner circumferential surface of the cylinder portion 212 to be supported in the piston direction.

The motor 300 may include an outer stator 310 supported between the first frame 210 and second frame 220 and around which a coil 311 is wound, an inner stator 320 coupled to an inner side of the outer stator 310 with a predetermined interval and inserted into the cylinder portion 212, and a mover 330 in which a magnet 331 is provided to correspond to the coil 311 of the outer stator 310 to perform a linear reciprocating movement along the magnetic flux direction between the outer stator 310 and inner stator 320. The outer stator 310 and inner stator 320 are formed by laminating a plurality of thin stator core sheets in a cylindrical shape for each sheet or laminating a plurality of thin stator core sheets in a block shape and laminating the stator block in a radial shape.

The compression unit 400 may include a cylinder 410 formed on the first frame 210 as an integral body, a piston 420 coupled to the mover 330 of the motor 300 to perform a reciprocating movement in the compression space (P) of the cylinder 410, a suction valve 430 mounted at a front end of the piston 420 to control the suction of the refrigerant gas while opening or closing the suction passage 421 of the piston 420, a discharge valve 440 mounted at a discharge side of the cylinder 410 to control the suction of the compression gas while opening or closing the compression space (P) of the cylinder 410, a valve spring 450 elastically supporting the discharge valve 440, and a discharge cover 460 fixed to the first frame 210 at a discharge side of the cylinder 410 to accommodate the discharge valve 440 and valve spring 450.

The cylinder 410 is formed in a cylindrical shape and inserted and coupled to the cylinder portion 212 of the first frame 210.

The cylinder 410 may be formed of a material having a hardness higher than that of cast iron or at least that of the first frame 210, more accurately, that of the cylinder portion 212 by considering abrasion due to the piston 420 as forming a bearing surface with the piston 420 an inner circumferential surface of which is made of cast iron.

The piston 420 may be preferably formed of the same material as the cylinder 410 or formed of a material having a hardness similar to that of the cylinder 410 to reduce abrasion with the cylinder 410. Furthermore, the suction passage 421 is formed in a penetrated manner within the piston 420 such that refrigerant is inhaled into the compression chamber (P) of the cylinder 410.

The resonant unit 500 may include a spring supporter 510 coupled to a connecting portion between the mover 330 and the piston 420, first resonant springs 520 supported at a front side of the spring supporter 510, and second resonant springs 530 supported at a rear side of the spring supporter 510.

In the drawing, non-described reference numeral 422 denotes a piston connecting portion and non-described reference numeral 600 denotes an oil feeder.

When power is applied to the motor 300 and a magnetic flux is formed between the outer stator 310 and inner stator 320, the mover 330 placed at a gap between the outer stator 310 and inner stator 320 continuously performs a reciprocating movement by the resonant unit 500 while moving along the direction of the magnetic flux. Furthermore, when the piston 420 performs a backward movement within the cylinder 410, refrigerant filled in an inner space of the casing 100 passes through the suction passage 421 of the piston 420 and the suction valve 430 and inhaled into the compression space (P) of the cylinder 410. When the piston 420 performs a forward movement within the cylinder 410, refrigerant gas inhaled into the compression space (P) is compressed to repeat a series of processes of discharging while opening the discharge valve 440.

The reciprocating compressor may be widely used for a freezing device such as a refrigerator or air conditioner. When the first and the second compressor are applied to a refrigerator as illustrated in FIG. 1, it may be designed such that each compressor takes charge of the refrigerating chamber and freezing chamber, respectively.

A compressor control apparatus for controlling a first and a second compressor connected to each other to compress refrigerant in two stages according to another embodiment may include a control unit 70 configured to generate a first and a second control signal based on a load of the first and the second compressor to operate the first and the second compressor, and the control unit 70 first starts the second compressor 12 and detects a top dead center of the second compressor 12 and then starts the first compressor.

Referring to FIGS. 3 through 5, a compressor control apparatus according to the foregoing embodiments may further include a first and a second load detection unit 61, 62 configured to detect a load of the first and the second compressor. Here, the control unit 70 generates a control signal controlling an inverter or alternating current (AC) switch based on the load. In other words, the control unit 70 generates a first and a second control signal based on the load of the first and the second compressor 11, 12 to operate the first and the second compressor in a separate or simultaneous manner. The control unit 70 generates a first and a second control signal using a first and a second stroke of the first and the second compressor 11, 12, and stroke instruction values for the first and the second compressor. Here, the load of the compressor may include a motor current, a motor voltage, a stroke, their phase difference, a frequency, and the like. For example, when a compressor is provided in a refrigerator, the load of the compressor may be detected using a load of the refrigerator.

The compressor control apparatus may further include a first and a second current detection unit 611, 621 configured to detect a first and a second motor drive current applied to a first and a second motor provided in the first and the second compressor, respectively. Furthermore, the compressor control apparatus may further include a first and a second voltage detection unit 612, 622 configured to detect a first and a second motor drive voltage applied to the first and the second motor.

The first and the second current detection unit 611, 621 detect a drive current applied to the compressor based on a load of the compressor or a load of the freezer. The current detection units detect a motor current applied to the compressor motor. The first and the second voltage detection unit 612, 622 detect a motor voltage applied to the compressor. The voltage detection units detect a motor voltage applied between both ends of the compressor motor based on a load of the compressor.

The compressor control apparatus may further include a first and a second stroke calculation unit 613, 623 configured to calculate a first and second stroke of the first and the second compressor, respectively, using the first and the second motor drive current and the first and the second motor drive voltage. The relationship among the motor voltage, motor current, and stroke is as follows. The first and the second stroke calculation unit 613, 623 may calculate a stroke using the following equation based on a motor voltage detected through the first and the second voltage detection unit 612, 622, and a motor current detected through the first and the second current detection unit 611, 621.

[Equation 1]

$$x = \frac{1}{\alpha} \int \left( Vm - Ri - L\frac{di}{dt} \right) dt$$

Here, x is a stroke, a is a motor constant, Vm is a motor voltage, R is a resistance, L is an inductance, and i is a motor current.

The control unit 70 receives a first stroke instruction value (xref1) and compares a first stroke estimate value (x1) calculated by the first stroke calculation unit 613 with the first stroke instruction value. The control unit compares the first stroke estimate value with the first stroke instruction value, and generates a control signal for controlling switching elements or an alternating current (AC) switch within the inverter based on the comparison result. In addition, the control unit receives a second stroke instruction value (xref2) and compares a second stroke estimate value (x2) calculated by the second stroke calculation unit 623 with the second stroke instruction value. The control unit compares the second stroke estimate value with the second stroke instruction value, and generates a first and a second control signal based on the comparison result. The compressor control apparatus typically performs sensorless control, and the detailed description thereof will be omitted.

The first and the second load detection unit 61, 62 may detect a load on the first compressor 11 and the second compressor 12, respectively, using the motor drive current, the motor drive voltage, or the first and the second stroke. The control unit 70 independently operates the first compressor and the second compressor based on the load on the first compressor and the second compressor detected through the first load detection unit and the second load detection unit.

The size of the compressor load may be detected using a phase difference between the motor current and stroke estimate value, and a phase difference between the motor voltage and stroke estimate value. Furthermore, the size of the compressor load may be detected using a gas spring constant (Kg). In addition, the size of the compressor load may be detected using a gas damping constant (Cg).

The control unit 70 detects a top dead center based on an inflection point of the gas spring constant of the second compressor or an inflection point of the phase difference between the motor drive current and stroke. The top dead center physically denotes a stroke at the compression cycle completion of a piston, and is a position where the top clearance volume (TCV) or top dead center (TDC) becomes zero.

The control unit 70 may include a gas spring constant calculation unit (not shown) configured to calculate a gas spring constant of the first and the second compressor and a top dead center detection unit (not shown) configured to detect the top dead center using an inflection point of the gas spring constant.

For another example, the control unit 70 may further include a phase difference detection unit (not shown) configured to detect a phase difference between the motor drive currents and the strokes and a top dead center detection unit (not shown) configured to detect the top dead center using an inflection point of the phase difference.

The piston within the compressor is provided with various springs to be elastically supported in the movement direction even when the piston performs a linear reciprocating movement by the compressor motor. Specifically, a coil spring which is a type of mechanical spring, is provided to be elastically supported by the airtight container and cylinder in the movement direction of the piston. In addition, refrigerant inhaled into the compression space is also operated as a gas spring. At this time, the coil spring has a predetermined mechanical spring constant (Km) and the gas spring has a gas spring constant (Kg) varied based on the load. A natural frequency (fn) of the linear compressor is determined in consideration of the mechanical spring constant (Km) and gas spring constant (Kg). A relationship among the natural frequency (fn), and mechanical and gas spring constants (Km, Kg) is as follows.

[Equation 2]

$$f_n = \frac{1}{2\pi} \sqrt{\frac{K_m + K_g}{M}}$$

Here, fn is a natural frequency of the piston, Km is a mechanical spring constant, Kg is a gas spring constant, and M is a mass of the piston.

The gas spring constant may be calculated using the following equation based on the motor current and stroke estimate value.

[Equation 3]

$$K_g = \alpha \left| \frac{I(jw)}{X(jw)} \right| \cos(\theta_{i,x}) + Mw^2 - K_m$$

Here, a is a motor constant, $\omega$ is an operating frequency, Km is a mechanical spring constant, Kg is a gas spring constant, M is a mass of the piston, $|I(j\omega)|$ is a current peak value for one period, and $|X(j\omega)|$ is a stroke peak value for one period.

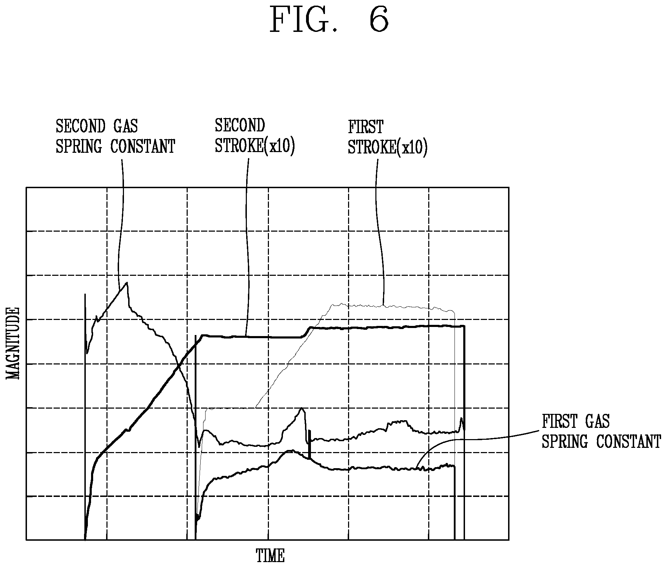

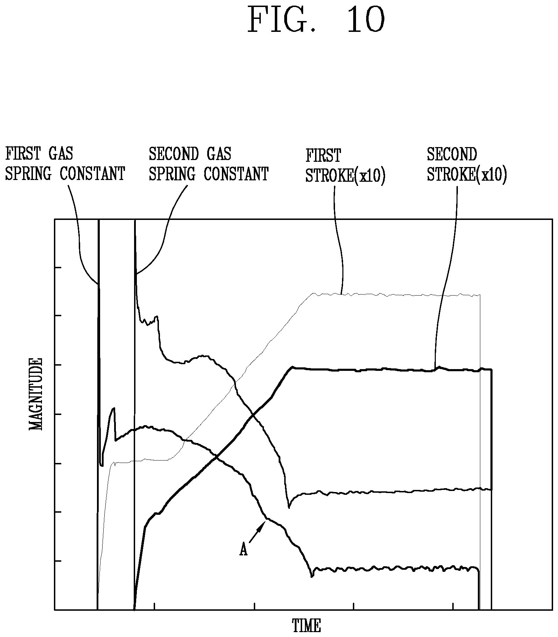

FIG. 6 illustrates a method of initially starting the second compressor and then starting the first compressor to operate the first and the second compressor according to the embodiments of the present disclosure. When the second compressor is started, it is seen that the second gas spring constant is gradually decreased from a large value, and the second stroke is gradually increased. At this time, the compressor control apparatus controls the second compressor to be constant with a second stroke at an inflection point of the second gas spring constant, thereby performing a so-called full stroke control or a top dead center control. Similarly, the compressor control apparatus operates the first compressor to be constant with a first stroke at an inflection point of the first gas spring constant. On the contrary, referring to FIG. 10, when the first compressor is initially started and then the second compressor is started, it is seen that the first stroke is increased even subsequent to the inflection point (position "A") of the first gas spring constant. In other words, a discharge pressure of the first compressor is affected by a suction pressure of the second compressor due to the start-up of the second compressor, and thus the inflection point of the first gas spring constant does not occur or the compressor control apparatus cannot detect the inflection point of the first gas spring constant. Accordingly, the first compressor can be operated by over stroke.

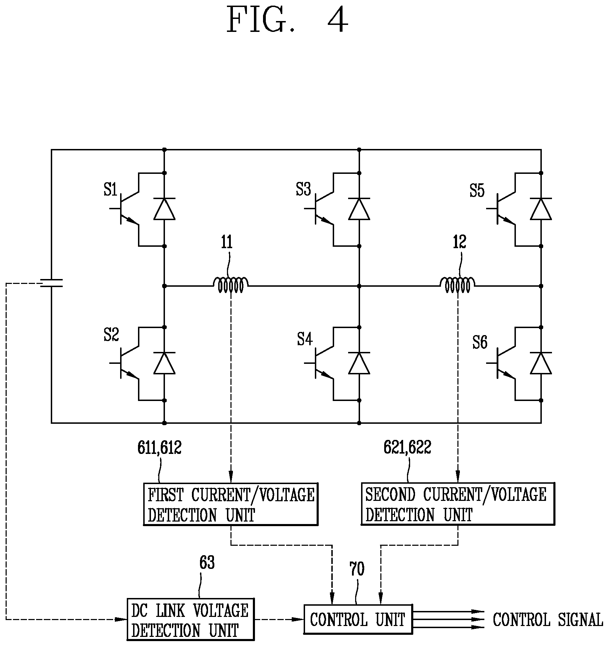

Referring to FIGS. 3 and 4, the compressor control apparatus may include a converter configured to rectify commercial alternating current power to direct current power, a smoothing unit configured to smoothen and store the rectified direct current power, a first inverter 81 configured to perform switching based on the first control signal to convert the smoothened direct current power into drive power for the first compressor so as to apply the drive power to the first compressor, and a second inverter 82 configured to perform switching based on the second control signal to convert the smoothened direct current power into drive power for the second compressor so as to apply the drive power to the second compressor.

The converter may include a plurality of diodes or a plurality of diodes and switching elements. In general, the converter may include a full-bridge diode to rectify commercial alternating current (AC) power and output the rectified power to a smoothing uniit. The first and the second inverter 81, 82 may include a plurality of switching elements to start and operate the first and the second compressor based on the first and the second control signal generated by the control unit 70. Referring to FIG. 4, the first and the second inverter may be configured with one inverter. The first and the second control signal are mostly pulse width modulation (PWM) signals such as space vector pulse width modulation (SVPWM) or the like. The control unit 70 may further include a direct current (DC) link voltage detection unit 63 for detecting a direct current (DC) link voltage stored in the smoothing unit, and may generate the first and the second control signal using the direct current (DC) link voltage along with the motor drive voltage and current.

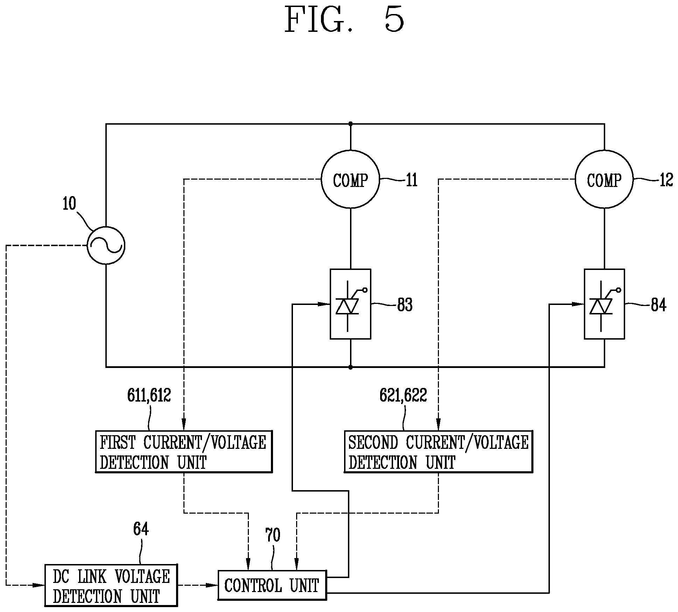

Referring to FIG. 5, the compressor control apparatus may include a first and a second alternating current (AC) switch 83, 84 configured to perform switching based on the first and the second control signal to drive the first and the second compressor. The first and the second alternating current (AC) switch are opened or closed to apply the motor drive voltage and motor drive current to compressor motors provided in the first and the second compressor. The alternating current (AC) switch may include a thyrister, a triac, or the like, but the triac is mostly used for the alternating current (AC) switch. The control unit 70 varies a firing angle of the first AC switch 83 or second AC switch 84 based on the freezing capacity of the first compressor 11 and second compressor 12. In this case, the compressor control apparatus may further include a power voltage detection unit 64 configured to detect the power voltage of the commercial alternating current (AC) power, a zero voltage detection unit configured to detect the zero voltage of the power voltage, and a power frequency detection unit configured to detect the power frequency of the commercial alternating current (AC) power.

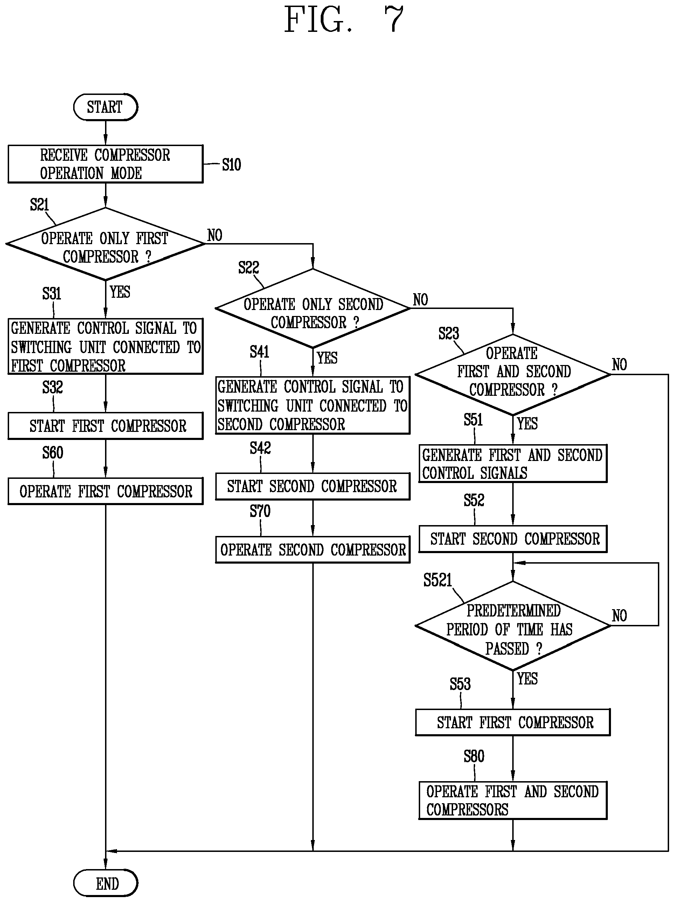

Referring to FIG. 7, a compressor control method in an apparatus for controlling a first and a second compressor connected to each other to compress refrigerant in two stages according to an embodiment may include receiving a compressor operation mode (S10) and starting the first and the second compressor according to the compressor operation mode, wherein said starting step first starts the second compressor (S51) and then starts the first compressor (S53) after a predetermined period of time has passed (S521) when the first and the second compressor are operated together (S23).

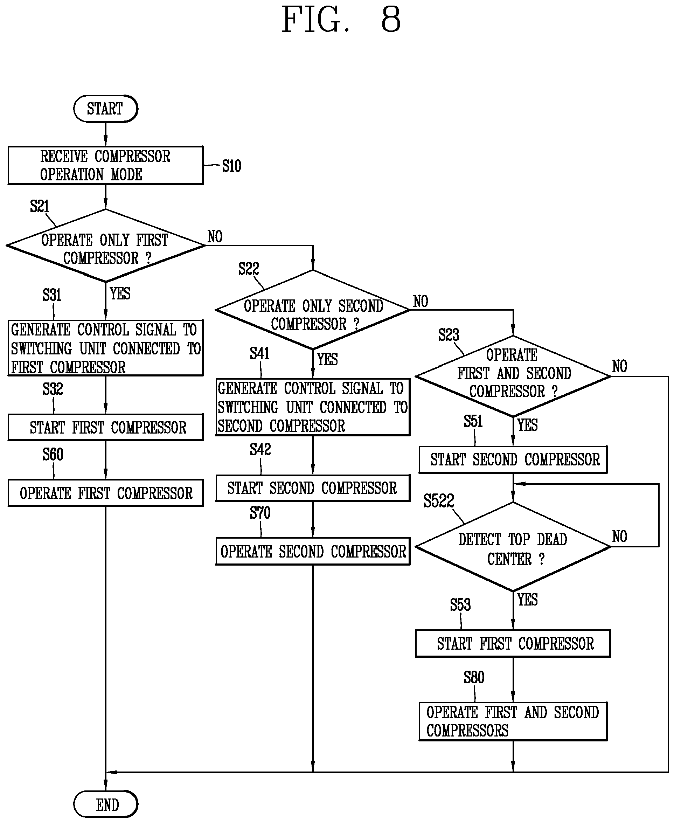

Referring to FIG. 8, a compressor control method in an apparatus for controlling a first and a second compressor connected to each other to compress refrigerant in two stages according to another embodiment may include receiving a compressor operation mode (S10) and starting the first and the second compressor according to the compressor operation mode, wherein said starting step first starts the second compressor (S51) and detects a top dead center of the second compressor (S522) and then starts the first compressor (S53) when the first and the second compressor are operated together (S23).

Said starting step may include starting the second compressor when the compressor operation mode is a mode in which the first and the second compressor are operated together, detecting a motor drive current and a motor drive voltage applied to a motor provided in the second compressor, calculating a gas spring constant of the first and the second compressor, detecting the top dead center using an inflection point of the gas spring constant, and starting the first compressor when the top dead center is detected.

Furthermore, said starting step may include starting the second compressor when the compressor operation mode is a mode in which the first and the second compressor are operated together, detecting a motor drive current and a motor drive voltage applied to a motor provided in the second compressor, calculating a stroke using the motor drive current and motor drive voltage, detecting a phase difference between the motor drive currents and the strokes, detecting the top dead center using an inflection point of the phase difference, and starting the first compressor when the top dead center is detected.

The first and the second switching unit are connected to the first and the second compressor, and then the compressor control apparatus receives a compressor operation mode (S10), and determines whether to operate the first compressor, operate the second compressor, or operate the first and the second compressor in a simultaneous manner based on the compressor operation mode (S21, S22, S23). Here, the first and the second switching unit is an inverter or triac.

Referring to FIG. 2, when operating the first compressor, the compressor control apparatus compares a first stroke instruction value (xref1) with a first stroke estimate value (x1), and generates a first control signal switching the first switching unit based on the comparison result (S31). Furthermore, when operating the second compressor, the compressor control apparatus compares a second stroke instruction value (xref2) with a second stroke estimate value, and generates a second control signal switching the second switching unit based on the comparison result (S41). When operating the first and the second compressor in a simultaneous manner, the compressor control apparatus generates the first and the second control signal to the first and the second switching unit, respectively.

Referring to FIG. 6, the compressor control apparatus first starts the second compressor (S51) and then starts the first compressor after a predetermined period of time has passed (or after detecting an inflection point of the gas spring constant or an inflection point of the phase difference) (S53) and operates the first and the second compressor (S80). When the second compressor is started, it is seen that the second gas spring constant is gradually decreased from a large value, and the second stroke is gradually increased. At this time, the compressor control apparatus controls the second compressor to be constant with a second stroke at an inflection point of the second gas spring constant, thereby performing a so-called full stroke control or a top dead center control. Similarly, the compressor control apparatus operates the first compressor to be constant with a first stroke at an inflection point of the first gas spring constant.

As described above, according to a compressor control apparatus and method, and a refrigerator comprising the same, in a refrigerator having two compressors, two compressors may be started with a time difference, thereby reducing an effect of the suction pressure and discharge pressure between mutual compressors. According to the embodiments of the present disclosure, the effect of the suction pressure and discharge pressure between mutual compressors may be reduced to stably operate the compressors, thereby securing the reliability of the compressor and enhancing the consumption power.

## Claims

1.   A compressor control apparatus for controlling a first and a second compressor (11, 12) connected to each other to compress refrigerant in two stages, the apparatus comprising:

a control unit (70) configured to generate a first and a second control signal based on a load of the first and the second compressor to operate the first and the second compressor (11, 12),
**characterized by** the control unit (70) being adapted to first start the second compressor (12), to detect a top dead center of the second compressor (12) after starting the second compressor (12), and to start the first compressor (11) after the top dead center of the second compressor (12) is detected,
wherein the first and the second compressor (11, 12) are linear compressors.

2.   The apparatus of claim 1, further comprising a first and/or a second load detection unit (61, 62) configured to detect a load of the first and/or the second compressor (11, 12).

3.   The apparatus as claimed in any one of the preceding claims, further comprising at least one of:

a first and a second current detection unit (611, 621) configured to detect a first and a second motor drive current applied to a first and a second motor provided in the first and the second compressor (11, 12), respectively;
a first and a second voltage detection unit (612, 622) configured to detect a first and a second motor drive voltage applied to the first and the second motor;
a first and a second stroke calculation unit (613, 623) configured to calculate a first and second stroke of the first and the second compressor, respectively.

4.   The apparatus as claimed in any one of the preceding claims, wherein the control unit comprises at least one of:

a gas spring constant calculation unit configured to calculate a gas spring constant of the first and the second compressor (11, 12);

a top dead center detection unit configured to detect the top dead center;

a phase difference detection unit configured to detect a phase difference between the motor drive currents and the strokes.

5. The apparatus as claimed in claim 4, wherein the top dead center detection unit is configured to detect the top dead center using an inflection point of the phase difference or using an inflection point of the gas spring constant.

6. The apparatus as claimed in any one of the preceding claims, wherein the first and the second compressor (11, 12) are reciprocating compressors, preferably having a brushless direct current motor.

7. The apparatus of claim 6, further comprising:

a converter configured to rectify commercial alternating current power to direct current power;

a smoothing unit configured to smoothen and store the rectified direct current power;

a first inverter (81) configured to perform switching based on the first control signal to convert the smoothened direct current power into drive power for the first compressor (11) so as to apply the drive power to the first compressor (11); and

a second inverter (82) configured to perform switching based on the second control signal to convert the smoothened direct current power into drive power for the second compressor (12) so as to apply the drive power to the second compressor (12).

8. The apparatus of claim 6, further comprising a first and a second alternating current switch (83, 84) configured to perform switching based on the first and the second control signal to drive the first and the second compressor (11, 12).

9. A compressor control method in an apparatus for controlling a first and a second compressor (11, 12) connected to each other to compress refrigerant in two stages, the method comprising:

receiving (S10) a compressor operation mode; and

starting (S52, S53) the first and/or the second compressor (11, 12) according to the compressor operation mode, **characterized by** said starting step first starting (S52) the second compressor (12) and detecting (S522) a top dead center of the second compressor (12) after starting the second compressor (12) and starting (S53) the first compressor (11) after the top dead center of the second compressor (12) is detected when the first and the second compressor are operated together,

wherein the first and the second compressor (11, 12) are linear compressors.

10. The method of claim 9, wherein said starting step comprises:

starting the second compressor (12) when the compressor operation mode is a mode in which the first and the second compressor are operated together;

detecting a motor drive current and a motor drive voltage applied to a motor provided in the second compressor (12);

calculating a gas spring constant of the first and the second compressor (11, 12);

detecting the top dead center using an inflection point of the gas spring constant; and

starting the first compressor (11) when the top dead center is detected.

11. The method of claim 9, wherein said starting step comprises:

starting the second compressor (12) when the compressor operation mode is a mode in which the first and the second compressor (11, 12) are operated together;

detecting a motor drive current and a motor drive voltage applied to a motor provided in the second compressor (12);

calculating a stroke using the motor drive current and motor drive voltage;

detecting a phase difference between the motor drive currents and the strokes;

detecting the top dead center using an inflection point of the phase difference; and

starting the first compressor (11) when the top dead center is detected.

12. A refrigerator, comprising:

a first and a second compressor (11, 12) connected to each other to compress refrigerant in two stages;
a condenser (20) connected to a discharge side of the second compressor (12) located at a downstream side based on the flowing direction of the refrigerant;
a first evaporator (31) branched from the condenser (20) and connected to a suction side of the first compressor (11) located at an upstream based on the flowing direction of the refrigerant;
a second evaporator (32) branched from the condenser (20) along with the first evaporator and connected between a discharge side of the first compressor (11) and a suction side of the second compressor (12);
a refrigerant switching valve (40) provided at a position branched from the outlet side of the condenser (20) to the first evaporator (31) and second evaporator (32) to control the flowing direction of the refrigerant; and
**characterized by** a control unit (70) configured to first start the second compressor (12), to detect a top dead center of the second compressor (12) after starting the second compressor (12) and to start the first compressor (11) after the top dead center of the second compressor (12) is detected when the first and the second compressor are operated together,
wherein the first and the second compressor (11, 12) are linear compressors.

**Patentansprüche**

1. Kompressorsteuervorrichtung zum Steuern eines ersten und eines zweiten Kompressors (11, 12), die miteinander verbunden sind, um Kältemittel in zwei Stufen zu komprimieren, wobei die Vorrichtung Folgendes umfasst:

eine Steuereinheit (70), die konfiguriert ist, ein erstes und ein zweites Steuersignal auf der Grundlage einer Last des ersten und des zweiten Kompressors zu erzeugen, um den ersten und den zweiten Kompressor (11, 12) zu betreiben,
**dadurch gekennzeichnet, dass** die Steuereinheit (70) ausgelegt ist, zunächst den zweiten Kompressor (12) zu starten, nach dem Starten des zweiten Kompressors (12) einen oberen Totpunkt des zweiten Kompressors (12) zu detektieren und den ersten Kompressor (11) zu starten, nachdem der obere Totpunkt des zweiten Kompressors (12) detektiert worden ist, wobei
der erste und der zweite Kompressor (11, 12) Linearverdichter sind.

2. Vorrichtung nach Anspruch 1, die ferner eine erste und/oder eine zweite Lastdetektionseinheit (61, 62) umfasst, die konfiguriert sind, eine Last des ersten und/oder des zweiten Kompressors (11, 12) zu detektieren.

3. Vorrichtung nach einem der vorhergehenden Ansprüche, die ferner Folgendes umfasst:

eine erste und eine zweite Stromdetektionseinheit (611, 621), die konfiguriert sind, einen ersten bzw. einen zweiten Motorantriebsstrom, der an einen ersten bzw. einen zweiten Motor, der im ersten bzw. zweiten Kompressor (11, 12) vorgesehen ist, angelegt ist, zu detektieren;
eine erste und eine zweite Spannungsdetektionseinheit (612, 622), die konfiguriert sind, eine erste und eine zweite Motoransteuerspannung, die an den ersten und den zweiten Motor angelegt sind, zu detektieren; und/oder
eine erste und eine zweite Hubdetektionseinheit (613, 623), die konfiguriert sind, einen ersten bzw. einen zweiten Hub des ersten bzw. des zweiten Kompressors zu berechnen.

4. Vorrichtung nach einem der vorhergehenden Ansprüche, wobei die Steuereinheit Folgendes umfasst:

eine Gasfederkonstantenberechnungseinheit, die konfiguriert ist, eine Gasfederkonstante des ersten und des zweiten Kompressors (11, 12) zu berechnen;
eine Detektionseinheit für obere Totpunkte, die konfiguriert ist, den oberen Totpunkt zu detektieren; und/oder
eine Phasendifferenzdetektionseinheit, die konfiguriert ist, eine Phasendifferenz zwischen den Motorantriebsströmen und den Hüben zu detektieren.

5. Vorrichtung nach Anspruch 4, wobei die Detektionseinheit für obere Totpunkte konfiguriert ist, den oberen Totpunkt unter Verwendung eines Wendepunkts der Phasendifferenz oder unter Verwendung eines Wendepunkts der Gasfederkonstante zu detektieren.

6. Vorrichtung nach einem der vorhergehenden Ansprüche, wobei der erste und der zweite Kompressor (11, 12) Kolbenverdichter sind, die bevorzugt einen bürstenlosen Gleichstrommotor besitzen.

7. Vorrichtung nach Anspruch 6, die ferner Folgendes umfasst:

einen Umsetzer, der konfiguriert ist, Netzwechselstromleistung in Gleichstromleistung gleichzurichten; eine Glättungseinheit, die konfiguriert ist, die gleichgerichtete Gleichstromleistung zu glätten und zu speichern; einen ersten Wechselrichter (81), der konfiguriert ist, ein Schalten auf der Grundlage des ersten Steuersignals durchzuführen, um die geglättete Gleichstromleistung in eine Antriebsleistung für den ersten Kompressor (11) umzusetzen, um die Antriebsleistung dem ersten Kompressor (11) zuzuführen; und einen zweiten Wechselrichter (82), der konfiguriert ist, ein Schalten auf der Grundlage des zweiten Steuersignals durchzuführen, um die geglättete Gleichstromleistung in eine Antriebsleistung für den zweiten Kompressor (12) umzusetzen, um die Antriebsleistung an den zweiten Kompressor (12) anzulegen.

8. Vorrichtung nach Anspruch 6, die ferner einen ersten und einen zweiten Wechselstromschalter (83, 84) umfasst, die konfiguriert sind, ein Schalten auf der Grundlage des ersten und des zweiten Steuersignals durchzuführen, um den ersten und den zweiten Kompressor (11, 12) anzutreiben.

9. Kompressorsteuerverfahren in einer Vorrichtung zum Steuern eines ersten und eines zweiten Kompressors (11, 12), die miteinander verbunden sind, um Kältemittel in zwei Stufen zu komprimieren, wobei das Verfahren Folgendes umfasst:

Empfangen (S10) eines Kompressorbetriebsmodus und Starten (S52, S53) des ersten und/oder des zweiten Kompressors (11, 12) gemäß dem Kompressorbetriebsmodus, **dadurch gekennzeichnet, dass** der Startschritt zunächst den zweiten Kompressor (12) startet (S52), nach dem Starten des zweiten Kompressors (12) einen oberen Totpunkt des zweiten Kompressors (12) detektiert (S522) und den ersten Kompressor (11) startet (S53), nachdem der obere Totpunkt des zweiten Kompressors (12) detektiert worden ist, wenn der erste und der zweite Kompressor gemeinsam betrieben werden, wobei der erste und der zweite Kompressor (11, 12) Linearverdichter sind.

10. Verfahren nach Anspruch 9, wobei der Startschritt Folgendes umfasst:

Starten des zweiten Kompressors (12), wenn der Kompressorbetriebsmodus ein Modus ist, in dem der erste und der zweite Kompressor gemeinsam betrieben werden; Detektieren eines Motorantriebsstroms und einer Motorantriebsspannung, die an einen Motor angelegt ist, der im zweiten Kompressor (12) vorgesehen ist; Berechnen einer Gasfederkonstante des ersten und des zweiten Kompressors (11, 12); Detektieren des oberen Totpunkts unter Verwendung eines Wendepunkts der Gasfederkonstante und Starten des ersten Kompressors (11), wenn der obere Totpunkt detektiert wird.

11. Verfahren nach Anspruch 9, wobei der Startschritt Folgendes umfasst:

Starten des zweiten Kompressors (12), wenn der Kompressorbetriebsmodus ein Modus ist, in dem der erste und der zweite Kompressor (11, 12) gemeinsam betrieben werden; Detektieren eines Motoransteuerstroms und einer Motorantriebsspannung, die an einen Motor angelegt sind, der im zweiten Kompressor (12) vorgesehen ist; Berechnen eines Hubs unter Verwendung des Motorantriebsstroms und der Motorantriebsspannung; Detektieren einer Phasendifferenz zwischen den Motorantriebsströmen und den Hüben; Detektieren des oberen Totpunkts unter Verwendung eines Wendepunkts der Phasendifferenz und Starten des ersten Kompressors (11), wenn der obere Totpunkt detektiert wird.

12. Kühleinrichtung, die Folgendes umfasst:

einen ersten und einen zweiten Kompressor (11, 12), die miteinander verbunden sind, um Kältemittel in zwei Stufen zu komprimieren; einen Kondensator (20), der mit einer Ausstoßseite des zweiten Kompressors (12), die sich auf einer auf der Grundlage der Durchflussrichtung des Kältemittels stromabwärts gelegenen Seite befindet, verbunden ist; einen ersten Verdampfer (31), der vom Kondensator (20) abgezweigt ist und mit einer Saugseite des ersten Kompressors (11), die sich auf einer auf der Grundlage der Durchflussrichtung des Kältemittels stromaufwärts gelegenen Seite befindet, verbunden ist;

einen zweiten Verdampfer (32), der gemeinsam mit dem ersten Verdampfer vom Kondensator (20) abgezweigt ist und zwischen einer Ausstoßseite des ersten Kompressors (11) und einer Saugseite des zweiten Kompressors (12) verbunden ist; und

ein Kältemittelschaltventil (40), das bei einer Position, die sich von der Ausstoßseite des Kondensators (20) zum ersten Verdampfer (31) und zum zweiten Verdampfer (32) verzweigt, vorgesehen ist, um die Durchflussrichtung des Kältemittels zu steuern;

**gekennzeichnet durch** eine Steuereinheit (70), die konfiguriert ist, den zweiten Kompressor (12) zu starten, nach dem Starten des zweiten Kompressors (12) einen oberen Totpunkt des zweiten Kompressors (12) zu detektieren und den ersten Kompressor (11) zu starten, nachdem der obere Totpunkt des zweiten Kompressors (12) detektiert worden ist, wenn der erste und der zweite Kompressor gemeinsam betrieben werden, wobei der erste und der zweite Kompressor (11, 12) Linearverdichter sind.

## Revendications

1. Appareil de commande de compresseur pour commander des premier et deuxième compresseurs (11, 12) raccordés l'un à l'autre pour comprimer un frigorigène en deux étages, l'appareil comprenant :

    une unité de commande (70) configurée pour générer des premier et deuxième signaux de commande sur la base d'une charge des premier et deuxième compresseurs pour faire fonctionner les premier et deuxième compresseurs (11, 12),

    **caractérisé en ce que** l'unité de commande (70) est apte à démarrer en premier le deuxième compresseur (12), détecter un point mort haut du deuxième compresseur (12) après le démarrage du deuxième compresseur (12), et démarrer le premier compresseur (11) après la détection du point mort haut du deuxième compresseur (12),

    dans lequel les premier et deuxième compresseurs (11, 12) sont des compresseurs linéaires.

2. Appareil selon la revendication 1, comprenant en outre des première et/ou deuxième unités de détection de charge (61, 62) configurées pour détecter une charge des premier et/ou deuxième compresseurs (11, 12).

3. Appareil selon l'une quelconque des revendications précédentes, comprenant en outre au moins l'une de :

    des première et deuxième unités de détection de courant (611, 621) configurées pour détecter des premier et deuxième courants d'entraînement de moteur appliqués respectivement à des premier et deuxième moteurs prévus respectivement dans les premier et deuxième compresseurs (11, 12) ;

    des première et deuxième unités de détection de tension (612, 622) configurées pour détecter des première et deuxième tensions d'entraînement de moteur appliquées aux premier et deuxième moteurs ;

    des première et deuxième unités de calcul de course (613, 623) configurées respectivement pour calculer des première et deuxième courses des premier et deuxième compresseurs.

4. Appareil selon l'une quelconque des revendications précédentes, dans lequel l'unité de commande comprend au moins l'une de :

    une unité de calcul de constante de ressort de gaz configurée pour calculer une constante de ressort de gaz des premier et deuxième compresseurs (11, 12) ;

    une unité de détection de point mort haut configurée pour détecter le point mort haut ;

    une unité de détection de différence de phase configurée pour détecter une différence de phase entre les courants d'entraînement de moteur et les courses.

5. Appareil selon la revendication 4, dans lequel l'unité de détection de point mort haut est configurée pour détecter le point mort haut en utilisant un point d'inflexion de la différence de phase ou en utilisant un point d'inflexion de la constante de ressort de gaz.

6. Appareil selon l'une quelconque des revendications précédentes, dans lequel les premier et deuxième compresseurs (11, 12) sont des compresseurs en va-et-vient, de préférence ayant un moteur à courant continu sans balai.

**7.** Appareil selon la revendication 6, comprenant en outre :

un convertisseur configuré pour redresser une puissance de courant alternatif commerciale en puissance de courant continu ;
une unité de lissage configurée pour lisser et stocker la puissance de courant continu redressée ;
un premier onduleur (81) configuré pour effectuer une commutation sur la base du premier signal de commande afin de convertir la puissance de courant continu lissée en puissance d'entraînement pour le premier compresseur (11) de manière à appliquer la puissance d'entraînement au premier compresseur (11) ; et
un deuxième onduleur (82) configuré pour effectuer une commutation sur la base du deuxième signal de commande afin de convertir la puissance de courant continu lissée en puissance d'entraînement pour le deuxième compresseur (12) de manière à appliquer la puissance d'entraînement au deuxième compresseur (12).

**8.** Appareil selon la revendication 6, comprenant en outre des premier et deuxième commutateurs de courant alternatif (83, 84) configurés pour effectuer une commutation sur la base des premier et deuxième signaux de commande afin d'entraîner les premier et deuxième compresseurs (11, 12).

**9.** Procédé de commande de compresseur dans un appareil pour commander des premier et deuxième compresseurs (11, 12) raccordés l'un à l'autre pour comprimer un frigorigène en deux étages, le procédé comprenant :

la réception (S10) d'un mode de fonctionnement de compresseur ; et
le démarrage (S52, S53) des premier et/ou deuxième compresseurs (11, 12) en fonction du mode de fonctionnement de compresseur,
**caractérisé en ce que** ladite étape de démarrage effectue en premier le démarrage (S52) du deuxième compresseur (12) et la détection (S522) d'un point mort haut du deuxième compresseur (12) après le démarrage du deuxième compresseur (12) et le démarrage (S53) du premier compresseur (11) après la détection du point mort haut du deuxième compresseur (12) lorsque les premier et deuxième compresseurs (11, 12) fonctionnent ensemble,
dans lequel les premier et deuxième compresseurs (11, 12) sont des compresseurs linéaires.

**10.** Procédé selon la revendication 9, dans lequel ladite étape de démarrage comprend :

le démarrage du deuxième compresseur (12) lorsque le mode de fonctionnement de compresseur est un mode dans lequel les premier et deuxième compresseurs fonctionnent ensemble ;
la détection d'un courant d'entraînement de moteur et d'une tension d'entraînement de moteur appliqués à un moteur prévu dans le deuxième compresseur (12) ;
le calcul d'une constante de ressort de gaz des premier et deuxième compresseurs (11, 12) ;
la détection du point mort haut en utilisant un point d'inflexion de la constante de ressort de gaz ; et
le démarrage du premier compresseur (11) lorsque le point mort haut est détecté.

**11.** Procédé selon la revendication 9, dans lequel ladite étape de démarrage comprend :

le démarrage du deuxième compresseur (12) lorsque le mode de fonctionnement de compresseur est un mode dans lequel les premier et deuxième compresseurs (11, 12) fonctionnent ensemble ;
la détection d'un courant d'entraînement de moteur et d'une tension d'entraînement de moteur appliqués à un moteur prévu dans le deuxième compresseur (12) ;
le calcul d'une course en utilisant le courant d'entraînement de moteur et la tension d'entraînement de moteur ;
la détection d'une différence de phase entre les courants d'entraînement de moteur et les courses ;
la détection du point mort haut en utilisant un point d'inflexion de la différence de phase ; et
le démarrage du premier compresseur (11) lorsque le point mort haut est détecté.

**12.** Réfrigérateur, comprenant :

des premier et deuxième compresseurs (11, 12) raccordés l'un à l'autre pour comprimer un frigorigène en deux étages ;
un condensateur (20) raccordé à un côté de décharge du deuxième compresseur (12) situé à un côté en aval sur la base du sens d'écoulement du frigorigène ;
un premier évaporateur (31) ramifié à partir du condensateur (20) et raccordé à un côté d'aspiration du premier compresseur (11) situé en amont sur la base du sens d'écoulement du frigorigène ;

un deuxième évaporateur (32) ramifié à partir du condensateur (20) avec le premier évaporateur et raccordé entre un côté de décharge du premier compresseur (11) et un côté d'aspiration du deuxième compresseur (12) ; une vanne de commutation de frigorigène (40) prévue à une position ramifiée à partir du côté de sortie du condensateur (20) jusqu'au premier évaporateur (31) et au deuxième évaporateur (32) pour commander le sens d'écoulement du frigorigène ; et

**caractérisé par** une unité de commande (70) configurée pour démarrer en premier le deuxième compresseur (12), détecter un point mort haut du deuxième compresseur (12) après le démarrage du deuxième compresseur (12), et démarrer le premier compresseur (11) après la détection du point mort haut du deuxième compresseur (12) lorsque les premier et deuxième compresseurs fonctionnent ensemble,

dans lequel les premier et deuxième compresseurs (11, 12) sont des compresseurs linéaires.

# FIG. 1

700

710

11

12

# FIG. 2

# FIG. 3

# FIG. 4

# FIG. 5

# FIG. 6

SECOND GAS
SPRING CONSTANT

SECOND
STROKE(x10)

FIRST
STROKE(x10)

MAGNITUDE

FIRST GAS
SPRING CONSTANT

TIME

# FIG. 7

START

RECEIVE COMPRESSOR OPERATION MODE — S10

S21 OPERATE ONLY FIRST COMPRESSOR ? — NO

YES

S31 GENERATE CONTROL SIGNAL TO SWITCHING UNIT CONNECTED TO FIRST COMPRESSOR

S32 START FIRST COMPRESSOR

S60 OPERATE FIRST COMPRESSOR

S22 OPERATE ONLY SECOND COMPRESSOR ? — NO

YES

S41 GENERATE CONTROL SIGNAL TO SWITCHING UNIT CONNECTED TO SECOND COMPRESSOR

S42 START SECOND COMPRESSOR

S70 OPERATE SECOND COMPRESSOR

S23 OPERATE FIRST AND SECOND COMPRESSOR ? — NO

YES

S51 GENERATE FIRST AND SECOND CONTROL SIGNALS

S52 START SECOND COMPRESSOR

S521 PREDETERMINED PERIOD OF TIME HAS PASSED ? — NO

YES

S53 START FIRST COMPRESSOR

S80 OPERATE FIRST AND SECOND COMPRESSORS

END

# FIG. 8

START

RECEIVE COMPRESSOR
OPERATION MODE — S10

S21
OPERATE ONLY FIRST
COMPRESSOR ? — NO

S22
OPERATE ONLY SECOND
COMPRESSOR ? — NO

S23
OPERATE
FIRST AND SECOND
COMPRESSOR ? — NO

YES

S31
GENERATE CONTROL SIGNAL TO
SWITCHING UNIT CONNECTED TO
FIRST COMPRESSOR

YES

S41
GENERATE CONTROL SIGNAL TO
SWITCHING UNIT CONNECTED TO
SECOND COMPRESSOR

YES

S51
START SECOND COMPRESSOR

S32
START FIRST COMPRESSOR

S42
START SECOND COMPRESSOR

S522
DETECT TOP DEAD
CENTER ? — NO

S60
OPERATE FIRST COMPRESSOR

S70
OPERATE SECOND COMPRESSOR

YES

S53
START FIRST COMPRESSOR

S80
OPERATE FIRST AND SECOND
COMPRESSORS

END

EP 2 620 721 B1

FIG. 9

24

# FIG. 10

FIRST GAS SPRING CONSTANT

SECOND GAS SPRING CONSTANT

FIRST STROKE(x10)

SECOND STROKE(x10)

MAGNITUDE

A

TIME

**EP 2 620 721 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2381190 A1
- US 20080150456 A1
- WO 2008019689 A2
- US 20070144190 A1